(19) **Europäisches Patentamt / European Patent Office / Office européen des brevets**

(11) **EP 1 827 680 B1**

(12) **FASCICULE DE BREVET EUROPEEN**

(45) Date de publication et mention
de la délivrance du brevet:
**12.08.2009 Bulletin 2009/33**

(21) Numéro de dépôt: **05821479.2**

(22) Date de dépôt: **09.12.2005**

(51) Int Cl.:
***B01J 21/04*** *(2006.01)*     ***C01B 31/00*** *(2006.01)*

(86) Numéro de dépôt international:
**PCT/BE2005/000182**

(87) Numéro de publication internationale:
**WO 2006/079186 (03.08.2006 Gazette 2006/31)**

(54) **PROCEDE DE SYNTHESE D'UN CATALYSEUR SUPPORTE POUR LA FABRICATION DE NANOTUBES DE CARBONE**

VERFAHREN ZUR SYNTHESE EINES TRÄGERKATALYSATORS ZUR HERSTELLUNG VON KOHLENSTOFFNANORÖHRCHEN

METHOD OF SYNTHESISING A SUPPORT CATALYST FOR THE PRODUCTION OF CARBON NANOTUBES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2004 EP 04447291**

(43) Date de publication de la demande:
**05.09.2007 Bulletin 2007/36**

(73) Titulaire: **Nanocyl S.A.**
**5060 Sambreville (BE)**

(72) Inventeurs:
  • **PRADA SILVY, Ricardo**
    **Norman, Oklahoma 73071 (US)**
  • **LIEGEOIS, Fanny**
    **B-5020 VEDRIN (BE)**
  • **CULOT, Bénédicte**
    **B-5190 JEMEPPE-SUR-SAMBRE (BE)**
  • **LAMBERT, Stéphanie**
    **B-4280 HANNUT (BE)**

(74) Mandataire: **pronovem**
    **Office Van Malderen**
    **Boulevard de la Sauvenière 85/043**
    **4000 Liège (BE)**

(56) Documents cités:
    **WO-A-03/004410**

    • **HOJIN RYU ET AL: "Effect of mechanochemical treatment of supported catalysts on the CVD growth of carbon nanomaterials" ELECTRONICS PACKAGING TECHNOLOGY CONFERENCE, 2002. 4TH 10-12 DEC. 2002, PISCATAWAY, NJ, USA,IEEE, 10 décembre 2002 (2002-12-10), pages 76-78, XP010635020 ISBN: 0-7803-7435-5**

**Description**

**Objet de l'invention**

La présente invention se rapporte à un procédé de synthèse d'un catalyseur supporté pour la fabrication de nanotubes de carbone ainsi qu'à l'utilisation de ce catalyseur dans un procédé de fabrication de nanotubes de carbone multi-paroi avec un rendement et une sélectivité accrue.

**Etat de la technique**

Depuis l'invention des nanotubes de carbone au début des années nonante, leur nombre d'applications n'a cessé de croître. Seul le prix de revient encore très élevé de cette matière limite son utilisation dans de nombreux domaines.

Durant les dernières années, les efforts de recherche se sont donc orientés vers la sélection des catalyseurs les plus adéquats. La voie des catalyseurs supportés s'étant montrée particulièrement prometteuse, on a plus particulièrement étudié les différents supports combinés à des sites catalytiques actifs ainsi que leur influence sur la sélectivité et le rendement obtenu.

Le document WO-03/004410 A1 divulgue toute une série de supports catalytiques pour la réalisation de nanotubes de carbone simple et multi-paroi. Les différents supports catalytiques dans ce document, sont essentiellement testés sur leur sélectivité, c'est à dire leur aptitude à former des nanotubes de carbone simple leur aptitude à former des nanotubes de carbone simple paroi ou double paroi par rapport à une certaine proportion de carbone amorphe ou de fibres de carbone. Cette sélectivité a été étudiée dans des plages de température assez larges qui varient de 400 à 1100° C et les rendements de dépôt de carbone varient entre 200 et 500% pour des temps de réaction d'environ soixante minutes. Ces travaux ont permis de choisir parmi quelques combinaisons support/site catalytique les plus prometteurs sans pour autant divulguer de manière précise les paramètres permettant d'améliorer le rendement, la sélectivité et donc la productivité.

Un rendement de 200% signifie la consommation de 100 grammes de catalyseur pour la fabrication de 200 grammes de dépôts de carbone. Parmi le carbone déposé, on retrouve malheureusement de fortes proportions de carbone amorphe et de fibres de carbone indésirables, le tout étant mélangé au catalyseur consommé. Cette contamination nécessite donc généralement une étape de purification qui vient encore greffer le coût de fabrication. Le rendement en nanotubes commercialisables chute alors rapidement, ce qui se fait immédiatement ressentir sur le prix de revient. Jusqu'à présent, les méthodes de fabrication de nanotubes sont essentiellement étudiées à une échelle de laboratoire qui est rarement transposable à une échelle semi-industrielle.

La fabrication de nanotubes de carbone à une échelle semi-industrielle nécessitait donc à la fois une optimisation du rendement et de la sélectivité du procédé.

Une consommation réduite de catalyseur permet d'ailleurs l'utilisation de supports catalytiques plus coûteux. Par ailleurs, une meilleure sélectivité permet pour beaucoup d'applications de se passer d'une étape de purification qui était pratiquement toujours nécessaire auparavant.

**Buts de l'invention**

La présente invention vise à fournir un procédé de synthèse d'un catalyseur supporté permettant d'atteindre une sélectivité et des rendements supérieurs à ceux obtenus dans l'état de la technique, le tout dans un temps de réaction beaucoup plus court. L'ensemble contribuant à une augmentation de productivité, considérable permettant d'abaisser sensiblement le coût de fabrication des nanotubes de carbone multi-paroi.

La présente invention vise en outre à fournir un procédé de fabrication de nanotubes de carbones multi-paroi à partir du nouveau catalyseur, apte a produire des dépôts de carbone essentiellement constitués de nanotubes et en particulier de nanotubes de carbone multi-paroi avec une distribution des parois beaucoup plus homogène que dans l'art antérieur.

**Eléments caractéristiques de l'invention**

La présente invention divulgue un procédé de synthèse d'un catalyseur pour la fabrication de nanotubes multi-paroi comportant les opérations suivantes:

- mélange d'une poudre de $Al(OH)_3$ d'une granulométrie inférieure à $80 \mu m$ à une solution aqueuse d'un sel de fer et de cobalt, l'ensemble formant une pâte;
- séchage de ladite pâte jusqu'à obtention d'une poudre avec un taux d'humidité inférieur à 5% en poids ;

- sélection de la fraction granulométrique inférieure à 70μm.

Selon des formes particulières de réalisation, l'invention comporte l'une ou plusieurs des caractéristiques suivantes :

- la poudre de Al(OH)$_3$. choisie au départ à une taille de particules inférieure à 70μm et une surface spécifique inférieure à 10m$^2$/g ;
- la poudre de Al(OH)$_3$ est choisie parmi la gibbsite ou la bayerite ;
- la poudre de Al(OH)$_3$ est la bayerite ;
- la solution aqueuse dudit sel de fer et de cobalt est une solution de Fe(NO$_3$)$_3$ et de Co(OAc)$_2$ ;
- le Fe(NO$_3$)$_3$ et de Co(OAc)$_2$ ont une pureté comprise entre 95 et 99% ;
- l'opération de séchage est effectuée dans un dessiccateur annulaire ;
- l'opération de sélection de la fraction granulométrique est précédée d'une opération de broyage ;
- ladite sélection se fait par tamisage ;
- les opérations de mélange, de séchage et de sélection sont effectuées simultanément ;
- une étape supplémentaire de broyage et de sélection précède l'étape de mélange.

La présente invention divulgue d'autre part un procédé de fabrication de nanotubes multi-paroi à partir du catalyseur obtenu selon le procédé de la revendication 1 comportant les étapes successives suivantes:

- conditionnement préalable dudit catalyseur à une température d'environ 700°C dans un four;
- mise en présence d'un flux d'éthylène et/ou de méthane pur avec ledit catalyseur à une température comprise entre 650 et 750°C durant 15 à 25 minutes dans le four.

Enfin, l'invention divulgue l'utilisation du catalyseur selon la revendication 1 pour la fabrication de nanotubes de carbone simple et multi-paroi.

## Brève description des figures

La figure 1 représente des nanotubes synthétisés avec un catalyseur d'une granulométrie inférieure à 63μm.
La figure 2 représente des nanotubes synthétisés sur un catalyseur d'une dimension inférieure à 20μm.
La figure 3 représente une microscopie électronique à transmission de l'alumine avec ses sites catalytiques en noir sur fond gris.
La figure 4 représente une photo de nanotubes synthétisés sur un catalyseur Fe-Co/Al$_2$O$_3$ séché dans une étuve à 120°C.
La figure 5 représente des nanotubes synthétisés sur un catalyseur Fe-Co/Al$_2$O$_3$ séché dans un dessiccateur en anneau à 155°C.
La figure 6 représente la distribution des diamètres des nanotubes de carbone en fonction de la fraction de la longueur totale.
La figure 7 représenta les intensités des signaux relatifs (IMe / ICo2p + IFe2p + 1 A12S) obtenus par spectroscopie de photoélectron de rayons X (XPS) en fonction de la granulométrie du catalyseur.

## Description détaillée de l'invention

L'inventeur est parti des combinaisons support/site catalytique les plus prometteurs divulgués dans le document WO-03/004410 A1. Dans la suite de l'exposé, nous entendrons par catalyseur, le support catalytique muni de son site catalytique.
Les premiers essais de synthèse de nanotubes de carbone multi-paroi ont été effectués par des compositions catalytiques d'acétylène sur un catalyseur cobalt/fer supporté par l'alumine. Dans l'art antérieur, on fait réagir l'acétylène avec le catalyseur durant environ 60 minutes, et on obtient un produit avec une teneur en carbone d'environ 80%. Les nanotubes obtenus sont de bonne qualité malgré une distribution en diamètre assez large et une présence significative de carbone amorphe.
Durant les essais d'amélioration du procédé de fabrication des nanotubes, l'acétylène a été remplacé par l'éthylène ou le méthane, plus faciles à manipuler pour des raisons de sécurité.
Les paramètres suivants ont alors été testés de façon systématique :

- la température du four pour le travail avec l'éthylène,
- le temps de synthèse nécessaire (durée optimale),

- le débit d'hydrocarbure,
- la concentration en éthylène dans le flux gazeux. Concernant le pourcentage de carbone obtenu en fonction de la température dans le four, on obtient une quantité optimale de nanotubes de carbone dans une plage entre 650 et 750°C et de préférence aux environs de 700°C.

Dans une seconde étape, le temps de synthèse nécessaire pour l'obtention de nanotubes a été testé. Il est évident que plus le temps de synthèse est long, plus le pourcentage de carbone dans l'échantillon est grand. Cependant, plus ce temps de synthèse est long, plus les nanotubes de carbone sont regroupés en fagots et plus la proportion de gros nanotubes augmente, ces effets sont indésirables. Par ailleurs, on a évidemment intérêt à avoir un temps de réaction le plus réduit possible pour la synthèse. On atteint un plateau aux environs de 20 à 25 minutes de temps de réaction, ce qui permet de conserver 80% de carbone dans les échantillons tout en diminuant le temps de réaction de manière sensible, ce qui est évidemment intéressant pour l'augmentation de la productivité recherchée.

D'autre part, la concentration en éthylène dans le flux gazeux a été testée en tant que variable. Le tableau 1 montre le pourcentage de carbone dans l'échantillon en fonction de la teneur en éthylène du flux gazeux. On constate aisément que les meilleurs résultats sont obtenus avec dé l'éthylène pur.

A la suite de cette expérience, le débit en éthylène en litre/minute a été testé dans les conditions de 700°C et 20 minutes. Un débit d'éthylène de 2l/min. est suffisant pour atteindre un seuil de production de carbone. Cependant l'inventeur a opté pour un débit de d'éthylène de 4l/min. pour éviter la formation de polyaromatiques indésirables lors de la synthèse. L'inventeur a constaté expérimentalement que ceux-ci étaient générés à un débit inférieur à 3l/min.

Les conditions optimales qui ont donc pu être déterminées pour l'utilisation d'un catalyseur cobalt/fer supporté sur alumine sont donc un temps de réaction d'environ 20 minutes sous un débit d'éthylène pur d'environ 4l/min. à une température d'environ 700°C et pour un volume de four donné. Ces conditions ont donc été choisies pour l'élaboration d'un catalyseur supporté optimisé (tableau 1). Le but poursuivi étant d'augmenter le rendement et la sélectivité pour amener la fabrication de nanotubes de carbones multi-paroi à une échelle semi-industrielle.

Tableau 1: Influence des conditions de synthèse sur le pourcentage de carbone obtenu

| Température | 600°C | 650°C | 700°C | 750 °C | 800 °C |
|---|---|---|---|---|---|
| % Carbone | 47 | 61 | 78 | 76 | 74 |
| Temps de synthèse | 10 min | 20 min | 40 min | 60 min | 80 min |
| % Carbone | 73 | 78 | 86 | 87 | 90 |
| Teneur en $C_2H_4$ | 20% | 40% | 60% | 80% | 100% |
| % Carbone | 55 | 61 | 71 | 76 | 78 |
| Débit de $C_2H_4$ | 1l/min | 2l/min | 3l/min | 4l/min | |
| % Carbone | 56 | 73 | 77 | 78 | |

La présente invention vise à fournir un procédé de préparation d'un catalyseur supporté utilisé pour la synthèse de nanotubes de carbone multi-paroi. Ce nouveau procédé de préparation permet d'atteindre une sélectivité et un rendement supérieurs à ceux obtenus dans l'état de l'art précédent. La productivité améliorée, qui est exprimée sur le plan quantitatif par la quantité de nanotube formée par masse de catalyseur consommée.

Le temps spatial est représenté par le rapport entre la masse de catalyseur (M) et le flux molaire des molécules de réactant (F). Un temps spatial très bref entre les molécules de réactant ($CH_4$/$C_2H_4$) et le catalyseur empêche la formation d'autres composés de carbone indésirables qui sont principalement le carbone amorphe et les fibres de carbone. Ceci est confirmé par les analyses obtenues par microscopie électronique des échantillons obtenus après 1h de synthèse et 0.33 h synthèse. Le résultat est montré dans le tableau 2.

Tableau 2

| Procédure de préparation du catalyseur | Rendement des nano-tubes (%) | mol C (nanotube) / mol C ($C_2H_4$) | Temps de synthèse (h) | Temps spatial (M/F) (gcat.h/mol ($C_2H_4$) | Qualité du carbone NTMP / MA |
|---|---|---|---|---|---|
| Art antérieur WO-03/004410 | 252 | 0.87 | 1 | 8.3 | +++ / -- |

(suite)

| Procédure de préparation du catalyseur | Rendement des nano-tubes (%) | mol C (nanotube) / mol C ($C_2H_4$) | Temps de synthèse (h) | Temps spatial (M/F) (gcat.h/mol ($C_2H_4$) | Qualité du carbone NTMP / MA |
|---|---|---|---|---|---|
| Art antérieur WO-03/004410 | 390 | 0.16 | 0.33 | 0.9 | +++ / --- |
| FeCO/Al(OH)$_3$ préparé selon l'invention | 1033 | 0.40 | 0.33 | 0.9 | +++ / --- |
| NTMP : nanotube multi-paroi, +++ = haute densité, -- basse densité, --- non observé. MA : matière amorphe. | | | | | |

Préparation du catalyseur selon l'invention

Le procédé de synthèse du catalyseur de l'invention comporte généralement les opérations suivantes :

- sélectionner un support à base d'hydroxyde d'aluminium (Al(OH)$_3$) de granulométrie inférieure à 80 $\mu$m et de surface spécifique et volume poreux inférieurs à 20m$^2$/g et 0.5cc/g, respectivement, ainsi qu'un taux d'humidité inférieur à 5% en poids. La perte de poids mesurée par ignition de l'hydroxyde d'aluminium varie entre 30-36% ;
- broyer et tamiser la poudre de Al(OH)$_3$ à une granulométrie inférieure à 70 $\mu$m ;
- imprégner les petites particules dans une malaxeuse avec une solution aqueuse d'un sel soluble de fer et de cobalt contenant une composition chimique entre 2% et 10% en poids total des métaux dans le catalyseur final. Le rapport atomique (Co/Fe+Co) varie entre 0.2-0.8. Les sels de fer et du cobalt généralement utilisés pour la préparation du catalyseur sont de Fe(NO$_3$)$_3$ et de Co(CH$_3$COO)$_2$ de pureté comprise entre 95.0 - 99.5% en poids ;
- le rapport volume de solution/masse du support varie entre 0.2 - 0.5cc/g ;
- le temps de malaxage de la pâte formée par contact entre la solution et le solide varie entre 5 et 25 minutes ;
- l'opération de séchage est effectuée dans une étuve à température comprise entre 25°C et 120°C en présence d'un flux d'air pendant 2 à 4 heures, ou encore dans un dessiccateur annulaire ou par lyophilisation ;
- avant l'étape de synthèse de nanotubes, le catalyseur est soumis à un conditionnement dans le réacteur de synthèse à 700°C en présence d'un flux d'azote entre 60-240l/h pendant 10 à 15 minutes, afin de préformer les phases activées qui resteront thermodynamiquement stables au cours de la synthèse ;
- la synthèse de nanotubes de carbone multiparois est réalisée à une température comprise entre 650 °C et 750°C, un flux d'éthylène compris entre 180-240l/h, un temps spatial (M/F) entre 0.9 et 1.1g.h/mol C$_2$H$_4$ durant 15 à 25 minutes de temps total de synthèse.

Les exemples suivants illustrent les formes d'exécution préférées de la présente invention.

**Exemple 1 :** *Effet des tailles de particules sur le rendement en carbone*

Un catalyseur Fe-Co/Al(OH)$_3$ a été préparé selon la procédure décrite ci dessus. L'hydroxyde d'aluminium utilisé présente la distribution de tailles de particules suivante:

| Taille de particules ( $\mu$m ) | % distribution |
|---|---|
| > 63 | 48 |
| 20 - 63 | 44 |
| <20 | 8 |

Le solide imprégné obtenu après l'étape de séchage a cependant été broyé et tamisé à différentes granulométries. Trois fractions différentes ont été obtenues:

I) particules de taille inférieure à 20 $\mu$m,

II) particules de taille inférieure à 63μm, et

III) particules de taille supérieure à 63μm.

Le rendement en nanotubes de carbone a été estimé à partir de l'équation suivante :

$$Rendement(\%) = \frac{(\text{masse de produit brut}) - (\text{masse réelle de catalyseur})}{(\text{masse réelle de catalyseur})} \cdot 100$$

où la masse de produit brut représente la masse du produit obtenu à la sortie du réacteur, c'est-à-dire la masse des nanotubes de carbone et la masse du catalyseur. La masse réelle du catalyseur représente la masse du catalyseur déposé dans le réacteur mais à laquelle on a retiré la perte de masse du catalyseur à cause de sa perte en eau lors de la montée en température. En effet, le catalyseur Fe-Co/Al(OH)$_3$ perd environ 30-36% de sa masse lorsqu'il est chauffé à 700°C pendant 10 min. sous azote.

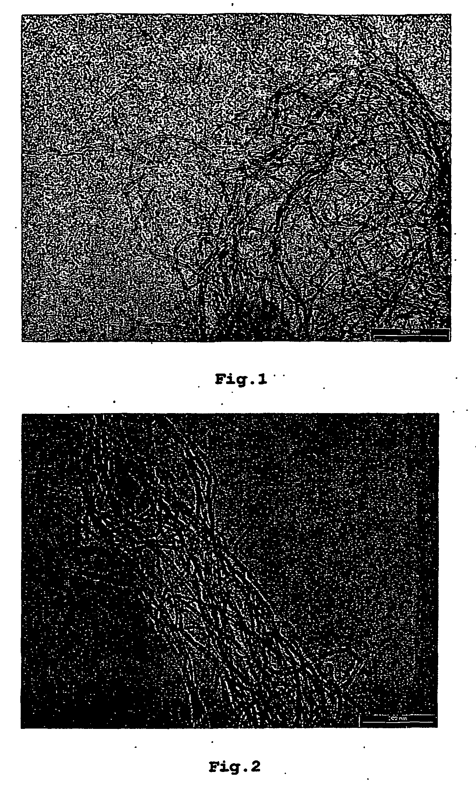

La figure 1 montre des nanotubes de carbone synthétisés sur une granulométrie de catalyseur < 63μm.

Cependant, la fraction massique récupérée après tamisage est très faible. En effet, lors de l'analyse de la granulométrie du catalyseur Fe-Co/Al(OH)$_3$ par diffraction lumineuse (Malvern), seulement 50% des particules ont une taille inférieure à 80μm.

La figure 2 représente des nanotubes de carbone synthétisés sur une granulométrie de catalyseur <20μm.

Le tableau 3 montre les résultats de la synthèse de nanotubes de carbone en fonction de la granulométrie du catalyseur. Les conditions expérimentales utilisées sont les suivantes :

- débit du C$_2$H$_4$ : 240 1/h
- temps de synthèse: 0.33h
- température : 700°C
- temps spatial du C$_2$H$_4$ (M/F): 0.4g.h/mol

On observe que le rendement en nanotubes de carbone et le rapport molaire entre le nanotube formé par atome de C en C$_2$H$_4$ augmentent progressivement lorsque la taille des particules du catalyseur diminue.

Tableau 3 : Résultats de la synthèse de nanotubes de carbone en fonction de la granulométrie du catalyseur

| Taille des particules | <20μm | 0-63μm | >63μm | Toutes tailles |
|---|---|---|---|---|
| % rendement de nanotubes | 790 | 610 | 395 | 390 |
| mol C (nanotube) / mol C (C$_2$H$_4$) | 0.13 | 0.09 | 0.07 | 0.07 |
| rendement relatif | 2.0 | 1.5 | 1.0 | 1.0 |

On peut dès lors diminuer la taille des grains de catalyseur en utilisant par exemple un broyeur planétaire. Les conditions suivantes ont été utilisées :

- broyage du catalyseur à 200 tours/min. pendant 5 minutes avec 15 billes de ZrO$_2$. 50% des particules ont une taille inférieure à 45μm;
- broyage du catalyseur à 200 tours/min. pendant 60 minutes avec 15 billes dé ZrO$_2$. 50% des particules ont une taille inférieure à 10μm;
- broyage du catalyseur à 250 tours/min. pendant 60 minutes avec 15 billes de ZrO$_2$. 50% des particules ont une taille inférieure à 10μm.

## Exemple 2 : *Effet du type d'hydroxyde d'aluminium*

L'effet du type d'hydroxyde d'aluminium utilisé comme support de catalyseur a été étudié. Il est connu, dans la littérature scientifique, que les ions d'aluminium en solution peuvent être précipités sous différents formes hydroxydes (Al(OH)$_3$, γ-AlOOH et précipités amorphes) en fonction du pH, de la température et du temps de vieillissement.

Les précipités amorphes se forment à une valeur de pH entre 4.0 et 6.0, la boehmite (γ-AlOOH) entre 6.5 et 8.0, la gibbsite et bayerite (Al(OH)$_3$) entre 8.5 et 10.5 et l'hydrargillite à pH entre 10.5 et 12.0.

Le tableau 4 montre les résultats obtenus dans la synthèse de nanotubes de carbone multi-parois d'une série de catalyseurs Co-Fe supportés sur différents types d'hydroxydes d'aluminium. On peut constater que la bayerite fournit des catalyseurs plus actifs que la gibbsite et que la boehmite.

Tableau 4: Effet du support dans l'activité des catalyseurs de synthèse des nanotubes de carbone

| Catalyseur | Rendement en carbone (%) |
|---|---|
| Co-Fe/ Bayerite | 758 |
| Co-Fe / Gibbsite | 177 |
| Co-Fe / Boehmite | 140 |
| Co-Fe/ Bayerite calcine à 700°C | 296 |
| Co-Fe / Gibbsite calcine à 700°C | 133 |
| Co-Fe / Boehmite calcine à 700°C | 283 |

Ces hydroxydes d'aluminium se transforment en $\gamma$-alumina après la calcination à 700°C. La surface spécifique du support augmente de <10m$^2$/g à 210m$^2$/g pour la bayerite et à 177m$^2$/g pour la gibsitte.

Une série de catalyseur Fe-Co ont été préparés à partir des supports calcinés. Le tableau 4 montre que la calcination du support provoque une perte des propriétés catalytiques. Ceci montre que la basicité de la surface joue un rôle important dans le développement de catalyseurs améliores pour la synthèse des nanotubes de carbone multi-paroi.

**Exemple 3:** *Effet des conditions de séchage du catalyseur*

Durant la montée en température, le support catalytique passe progressivement par plusieurs structures chimiques et texturales, modifiant la densité apparente de celui-ci. Les sels de fer et de cobalt se transforment également en oxydes.

- densité apparente théorique de $Al(OH)_3$ : 2.42g/cm$^3$
- densité apparente théorique de $Al_2O_3.3H_2O$ : 2.53g/cm$^3$
- densité apparente théorique de $Al_2O_3.H_2O$ : 3.014g/cm$^3$
- densité apparente théorique de $Al_2O_3$ : 3.965g/cm$^3$

Les échantillons qui ont subi différentes méthodes de séchage, ont été désignés de la façon suivante:

- MWA040122 : catalyseur Fe-Co/Al(OH)$_3$ <u>séché dans une étuve à pression atmosphérique</u> et à 120°C pendant 12h ;
- MWA ring 5 : catalyseur Fe-Co/Al(OH)$_3$ <u>séché dans le dessiccateur à anneau (ring-dryer)</u> à 155°C (=$T_{in}$). Dès lors, la température de sortie, Tout, est égale à 86°C ;
- MWA ring 7 : catalyseur Fe-Co/Al(OH)$_3$ <u>séché dans le dessiccateur à anneau (ring-dryer)</u> à 185°C (=$T_{in}$). Dès lors, la température de sortie, $T_{out}$, est égale à 97°C.

Globalement, on constate que les propriétés texturales du catalyseur Fe-Co/Al(OH)$_3$ sont influencées par le type de séchage. Ainsi, un séchage rapide par ring-dryer, permettant de sécher 1kg de catalyseur mouillé en 9 minutes, fournit un catalyseur mieux séché, dont le résidu en eau est inférieur à 2% contre une teneur résiduelle en eau de 5% pour un séchage dans une étuve à 120°C.

De la même façon, après un séjour de 10 min. à 700°C sous azote, la densité apparente des catalyseurs séchés par ring-dryer s'approche fortement de la valeur de la densité apparente de l'alumine déshydratée (3,965g/cm$^3$).

La surface spécifique ($S_{BET}$) développée par les catalyseurs séchés par ring-dryer est légèrement plus élevée, ce qui serait la conséquence d'une évaporation plus importante de l'eau résiduelle, libérant ainsi des micropores (pores dont la taille est inférieure à 2nm) et des mésopores (pores dont la taille est comprise entre 2 et 50nm) supplémentaires.

Les propriétés texturales du catalyseur Fe-Co/Al(OH)$_3$ séché dans différentes conditions sont analysées de la façon suivante

Adsorption-désorption d'azote (Analyse BET)

Cette technique permet de vérifier l'existence de micropores (pores dont la taille <2nm) et de mésopores (2nm <taille des pores <20nm) présents dans le support catalytique, qui est dans notre cas Al(OH)$_3$ pour le catalyseur séché

(MWA séché) et Al$_2$O$_3$ pour le catalyseur resté 10 min. sous azote à 700°C (MWA blanc).

On a observé que la porosité du support Al(OH)$_3$ est très faible (S$_{BET}$ <10m$^2$/g) Lors de la conditionnement à 700°C pendant 10 min., on augmente très fortement la surface spécifique car on libère les micro- et les mésopores, de l'eau résiduelle subsistant après le séchage à l'étuve à 120°C pendant une nuit. Ainsi, l'inventeur montre que l'étape de conditionnement pendant 10 minutes est indispensable pour l'obtention d'une grande texture poreuse du support catalytique Al$_2$O$_3$.

Porosimétrie au mercure

Cette technique permet de vérifier l'existence de grands mésopores (20nm <taille des pores <50nm) et de macropores (taille des pores >50nm) présents dans le support catalytique, qui est dans notre cas Al(OH)$_3$ pour le catalyseur séché (MWA séché) et Al$_2$O$_3$ pour le catalyseur resté 10 min. sous azote à 700°C (MWA blanc).

On a constaté que les volumes poreux sont très faibles (<0.2cm$^3$/g) ce qui indique l'absence de très grands pores (macropores). On a aussi observé une légère augmentation du volume poreux entre le catalyseur séché et le catalyseur blanc. En effet, le support catalytique Al$_2$O$_3$ se forme à partir de 300°C-400°C lors de la déshydratation de Al(OH)$_3$, libérant ainsi quelques grands mésopores.

Microscopie électronique à transmission

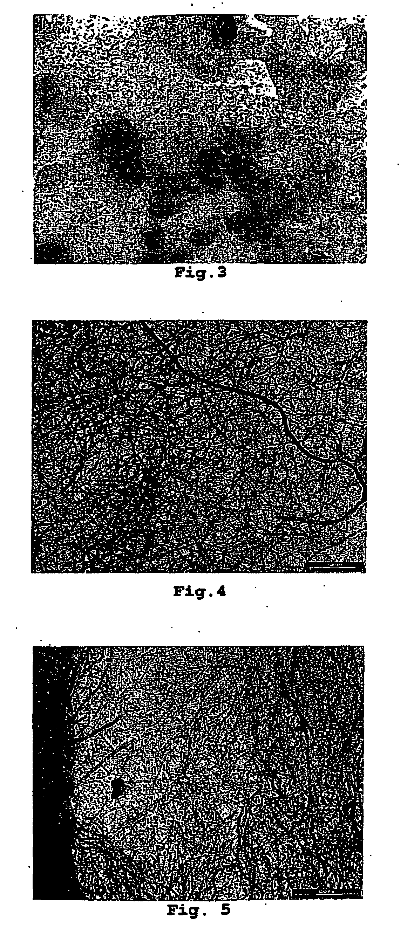

La figure 5 représente un échantillon MWA blanc sous un grossissement de 500000 fois.

Le support Al$_2$O$_3$ est bien cristallisé avec un diamètre des cristallites s'échelonnant de 7 à 12nm. Ces cristallites s'agglomèrent pour former des petits agrégats lamellaires dont la taille varie de 0.5 à 1µm. A la surface des cristallites de support on observe des particules plus noires qui sont les sites actifs composés de CoO, FeO et d'oxydes mixtes Fe-Co (selon des diffractogrammes de XRD). Leurs dimensions vont de 3 à 9nm (Données TEM et XRD)

## Tableau 5: Influence du séchage sur les propriétés texturales des catalyseurs

| Catalyseur | Densité macroscopique (g/cm$^3$) ± 0.1 | Densité apparente (g/cm$^3$) ± 0.01 | S$_{BET}$ (m$^2$/g) ± 10 |
|---|---|---|---|
| MWA040122 séché | 1 | 2.43 | <10 |
| MWA ring 5 séché | 0.? | 2.51 | <10 |
| MWA ring 7 séché | 0.? | 2.49 | <10 |
| MWA040122 blanc* | 0.8 | 3.21 | 250 |
| MWA ring 5 blanc* | 1.0 | 3.65 | 310 |
| MWA ring 7 blanc* | 1.1 | 3.82 | 300 |

Le tableau 5 représente l'influence du séchage sur les propriétés texturales des catalyseurs. La densité macroscopique est mesurée par gravimétrie, il s'agit de la masse spécifique, du matériau en tenant compte des pores accessibles et inaccessibles ainsi que les vides interparticulaires à l'intérieur du matériau. La densité apparente est déterminée par pycnométrie à l'hélium, il s'agit de la masse spécifique, du matériau, incluant les pores fermés et inaccessibles du matériau. La surface spécifique du matériau (S$_{BET}$) déterminée par adsorption-désorption d'azote à 77K.

Activité et sélectivité des catalyseurs

Les trois catalyseurs Fe-Co/Al(OH)$_3$ séchés sont testés dans le réacteur discontinu de synthèse des nanotubes de carbone multi-paroi selon la procédure suivante :

1. 10,0g de catalyseur sont dispersés dans la zone centrale d'une grande nacelle ;
2. La nacelle est placée dans la zone froide du réacteur discontinu ;
3. On réalise une purge de 4min. sous N$_2$ ;
4. On rentre la nacelle dans la zone chaude du four à 700°C ;

5. On conditionne durant 10 min. le catalyseur sous $N_2$ (21/min.), à 700° C ;

6. On fournit un débit de $C_2H_4$ de 41/min. durant 20 minutes ;

7. On purge sous $N_2$ (21/min.) pendant 10 min., dans la zone froide du réacteur discontinu.

On pèse le produit sortant et on calcule le rendement de production selon l'équation décrite auparavant.

Tableau 6: Rendement en nanotubes des différents catalyseurs séchés

| Catalyseur | Rendement (%) $\pm$ 5% | Qualité des NTs |
|---|---|---|
| MWA040122 séché | 395 | Beaux MWNTs (voir photo*) |
| MWA ring 5 séché | 625 | Beaux MWNTs (voir photo*) |
| MWA ring 7 séché | 575 | Beaux MWNTs |
| MWTS = multi-wall nanotubes | | |

Le tableau 6 montre le rendement des différents catalyseurs. On constate que les rendements des catalyseurs séchés au ring-dryer (MWA ring 5 et MWA ring 7) sont nettement supérieurs (625% et 575%) à ceux obtenus par le catalyseur qui a été séché en étuve (395%).

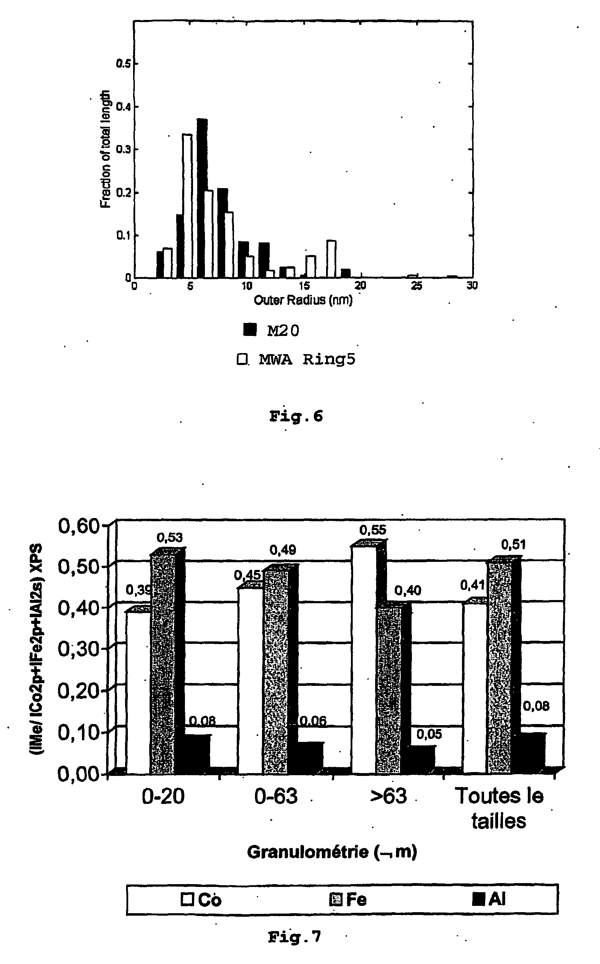

Les figure 5 et 6 représentent des nanotubes synthétisés sur un catalyseur Fe-Co/$Al_2O_3$ séché respectivement dans une étuve à 120°C et dans le ring-dryer à 155°C.

Le type de séchage n'influence nullement la qualité des nanotubes de carbone multi-parois. Au contraire, la distribution des diamètres des nanotubes synthétisés à partir des échantillons "MWA ring 5" et "MWA ring 7", est plus homogène que pour le catalyseur séché à l'étuve "MWA 040122". Ceci est illustré dans la figure 7.

Le type de séchage (soit par étuve, soit par dessiccateur à anneau-ring-dryer) influence donc très fortement l'aspect macroscopique du catalyseur. En effet, le catalyseur séché dans l'étuve à 120°C se présente sous la forme de grumeaux qui sont dès lors broyés dans un mixer afin d'obtenir une poudre homogène capable d'être déposée uniformément dans le réacteur de synthèse des nanotubes de carbone. Lors du séchage dans le ring-dryer, le catalyseur séché se présente directement sous la forme d'une poudre très fine et homogène. Il s'est dès lors avéré que la granulométrie externe des grains de catalyseur influence le rendement de production des nanotubes de carbone multi-paroi sans en altérer la qualité.

**Exemple 4 :** *Importance de la séquence des étapes de préparation et en particulier de l'étape d'imprégnation*

Etant donné les différences en rendements de nanotubes de carbone observées en fonction de la granulométrie du catalyseur dans l'exemple 1, nous avons broyé et tamisé l'hydroxyde d'aluminium en différentes tailles de particules avant d'effectuer l'imprégnation de celui-ci avec les solutions de sels métalliques. Ceci est un mode d'exécution préféré de la présente invention.

Le tableau 7 montre les résultats de la synthèse de nanotubes de carbone obtenus avec les catalyseurs préparés à partir du support Al(OH)$_3$ broyé et tamisé. On peut constater une forte augmentation du rendement en nanotube de carbone par rapport à l'alumine imprégnée avant broyage et tamisage (exemple 1). Dans ce cas, les particules avec une taille <63$\mu$m présentent le même pourcentage de rendement en nanotubes de carbone (1030%).

Conditions de synthèse:

- Débit $C_2H_4$ : 41/min
- Temps de synthèse: 20min
- Température : 700°C
- Temps spatial du $C_2H_4$ (M/F): 0.9g.h/mol

Tableau 7: Résultats de la synthèse de nanotubes de carbone obtenus avec les catalyseurs préparés à partir du support Al(OH)$_3$ broyé et tamisé avant imprégnation

| Propriété | <20$\mu$m | 0-63$\mu$m | >63$\mu$m | Toutes tailles |
|---|---|---|---|---|
| % rendement de nanotubes | 1032 | 1021 | 816 | 390 |
| mol C (nanotube) /mol C (C$_2$H$_4$) | 0.39 | 0.39 | 0.31 | 0.16 |
| Rendement relatif | 2.7 | 2.6 | 2.1 | 1.0 |

Les tableaux 3 et 7 montrent aussi la variation du pourcentage de rendement en nanotubes de carbone en fonction de la granulométrie de catalyseur relatif à toutes les tailles de particules pour les échantillons préparés dans les exemples 1 et 2. On peut constater que la méthode de préparation préférée de l'invention (exemple 3) augmente le rendement en nanotubes par un facteur d'environ 2.7 tandis que, les petites particules (<20$\mu$m) dans le catalyseur préparé selon l'état de l'art précédant montre un rendement relatif de 2.0 par rapport à toutes le tailles de particules.

Les petites particules présentent une plus grande surface externe que les grosses particules, pour cette raison on pourra s'attendre à des différences de composition chimique en fonction de la granulométrie du solide. En fait, les analyses par spectroscopie de photoélectron de rayons X (XPS) effectuées sur les différents échantillons (figure 7) mettent en évidence des différences de composition et d'état de dispersion en surface des phases de Co et Fe supportées en fonction de la granulométrie du catalyseur.

Par ailleurs, la synthèse de nanotubes de carbone est une réaction endothermique donc, elle est favorisée par des hautes températures. Pour cette raison, la réaction est affectée par les phénomènes de transfert de masse et de chaleur dans le réacteur et par la conductivité thermique des particules de catalyseur. La littérature montre que la conductivité thermique d'un hydroxyde d'aluminium en fonction de la température et du milieu (vide, air, hélium) augmente au fur et à mesure que la macroporosité de la matière et les espaces inter particules diminuent.

Ces deux effets simultanés peuvent expliquer le comportement de la synthèse de nanotubes de carbone en fonction de la distribution de taille des particules.

*Conclusions générales*

Il s'avère que la taille des grains du catalyseur Fe-Co/Al(OH)$_3$ influence très fortement le rendement de production des nanotubes multi-parois sans en altérer leur qualité. Ainsi, le rendement de production des nanotubes augmente lorsque la taille externe des grains de catalyseur diminue. De plus, la distribution de taille des nanotubes multi-paroi semble plus monodispersée lorsque la taille externe des grains de catalyseur diminue.

Par rapport aux résultats obtenus dans l'art antérieur, on observe que l'utilisation de catalyseurs Fe-Co/Al(OH)$_3$ avec une granulométrie initiale plus fine permet de synthétiser des nanotubes de carbone multi-paroi avec des dimensions de diamètres externes distribués plus étroitement autour de la moyenne. Ces moyennes sont égales à 6.8nm pour l'échantillon MWA ring 5 séchés et à 7.1nm pour l'échantillon M 20 (granulométrie inférieure à 20$\mu$m). Par ailleurs, le pourcentage de carbone amorphe obtenu est pratiquement nul.

L'imprégnation du support broyé et tamisé d'une granulométrie inférieur à 63$\mu$m avec la solution de Fe et Co, permet l'obtention de catalyseurs avec une très haute performance pour la production de nanotubes de carbone.

**Revendications**

**1.** Procédé de synthèse d'un catalyseur pour la fabrication de nanotubes de carbone multi-paroi comportant les opérations suivantes:

- mélange d'une poudre de Al(OH)$_3$ d'une granulométrie inférieure à 80$\mu$m à une solution aqueuse d'un sel de fer et de cobalt, l'ensemble formant une pâte;
- séchage de ladite pâte jusqu'à obtention d'une poudre avec un taux d'humidité inférieur à 5% en poids ;
- sélection de la fraction granulométrique inférieure à 70$\mu$m.

**2.** Procédé selon la revendication 1 **caractérisé en ce que** la poudre de Al(OH)$_3$ choisie au départ a une taille de particules inférieure à 70$\mu$m et une surface spécifique inférieure à 10m$^2$/g.

**3.** Procédé selon la revendication 1 ou 2 **caractérisé en ce que** la poudre de Al(OH)$_3$ est choisie parmi la gibbsite ou la bayerite.

**4.** Procédé selon la revendication 3 **caractérisé en ce que** la poudre de Al(OH)$_3$ est la bayerite.

**5.** Procédé selon l'une quelconque des revendications précédentes **caractérisé en ce que** la solution aqueuse dudit sel de fer et de cobalt est une solution de Fe(NO$_3$)$_3$ et de Co(Ac)$_2$.

**6.** Procédé selon l'une quelconque des revendications précédentes **caractérisé en ce que** le Fe(NO$_3$)$_3$ et le Co(Ac)$_2$ ont une pureté comprise entre 95 et 99%.

**7.** Procédé selon l'une quelconque des revendications précédentes **caractérisé en ce que** l'opération de séchage est effectuée dans un dessiccateur annulaire.

**8.** Procédé selon l'une quelconque des revendications précédentes **caractérisé en ce que** l'opération de sélection de la fraction granulométrique est précédée d'une opération de broyage.

**9.** Procédé selon la revendication 8 **caractérisé en ce que** ladite sélection se fait par tamisage.

**10.** Procédé selon l'une quelconque des revendications précédentes **caractérisé en ce que** les opérations de mélange, de séchage et de sélection sont effectuées simultanément.

**11.** Procédé selon l'une quelconque des revendications précédentes **caractérisé en ce que** une étape supplémentaire de broyage et de sélection précède l'étape de mélange.

**12.** Procédé de fabrication de nanotubes de carbone multi-paroi à partir du catalyseur obtenu selon le procédé de la revendication 1 comportant les étapes successives suivantes:

- conditionnement préalable dudit catalyseur à une température d'environ 700°C dans un four;
- mise en présence d'un flux d'éthylène et/ou de méthane pur avec ledit catalyseur à une température comprise entre 650 et 750°C durant 15 à 25 minutes dans le four.

**13.** Procédé de fabrication selon la revendication 12 **caractérisé en ce que** le temps spatial entre le catalyseur et le gaz est de 0,8 à 1,8 (M/F).

**Claims**

**1.** Method of synthesising a catalyst for manufacturing multiwall carbon nanotubes comprising the following operations:

- mixing of an Al(OH)$_3$ powder with a granulometry of less than 80 $\mu$m with an aqueous solution of an iron and cobalt salt, the whole forming a paste;
- drying of said paste until a powder with a moisture level of less than 5% by weight is obtained;
- selection of the fraction with a granulometry of less than 70 $\mu$m.

**2.** Method as in Claim 1, **characterized in that** the Al(OH)$_3$ powder selected at the start has a particle size of less than 70 $\mu$m and a specific surface area of less than 10 m$^2$/g.

**3.** Method as in Claim 1 or Claim 2, **characterized in that** the Al(OH)$_3$ powder is selected from gibbsite or bayerite.

**4.** Method as in Claim 3, **characterized in that** the Al(OH)$_3$ powder is bayerite.

**5.** Method as in any of the above claims, **characterized in that** the aqueous solution of said iron and cobalt salt is a solution of Fe(NO$_3$)$_3$ and Co(Ac)$_2$.

**6.** Method as in any of the above claims, **characterized in that** the Fe(NO$_3$)$_3$ and Co(Ac)$_2$ have a purity of between 95 and 99%.

7. Method as in any of the above claims, **characterized in that** the drying operation is performed in a ring dryer.

8. Method as in any of the above claims, **characterized in that** the operation of selection of the granulometric fraction is preceded by a crushing operation.

9. Method as in Claim 8, **characterized in that** said selection is performed by sieving.

10. Method as in any of the above claims, **characterized in that** the mixing, drying and selection operations are performed simultaneously.

11. Method as in any of the above claims, **characterized in that** an additional grinding and selection stage precedes the mixing stage.

12. Method of manufacturing multiwall carbon nanotubes from the catalyst obtained according to the method of Claim 1 comprising the following successive stages:

   - prior conditioning of said catalyst at a temperature of about 700°C in an oven;
   - putting a flow of pure ethylene and/or methane in the presence of said catalyst at a temperature of between 650 and 750°C for 15 to 25 minutes in the oven.

13. Method of manufacturing as in Claim 12, **characterized in that** the space time between the catalyst and the gas is between 0.8 and 1.8 (M/F).

**Patentansprüche**

1. Katalysator-Synthese-Verfahren für die Herstellung von mehrwandigen Kohlenstoff-Nanonröhren, das die folgenden Abläufe umfasst:

   - Mischen eines $Al(OH)_3$-Puders, mit einer Körnungsgröße von weniger als 80 $\mu$m, mit einer wässrigen Eisensalz-Kobalt-Lösung, sodass sich hieraus eine Paste ergibt;
   - Trocknen der besagten Paste bis zum Erhalt eines Puders mit einer Feuchtigkeitsrate von weniger als 5% Gewichtsprozent;
   - Auswahl des Körnungsgrößenanteils von weniger als 70 $\mu$m.

2. Verfahren gemäß dem Anspruch 1, **dadurch gekennzeichnet, dass** der besagte anfangs ausgewählte $Al(OH)_3$-Puder über eine Partikelgröße von weniger als 70 $\mu$m und eine spezifische Oberflächengröße von weniger als 10 $m^2$/g verfügt.

3. Verfahren gemäß den Ansprüchen 1 oder 2, **dadurch gekennzeichnet, dass** der $Al(OH)_3$-Puder aus dem Hydrargillit oder dem Bayerit ausgewählt wird.

4. Verfahren gemäß dem Anspruch 3, **dadurch gekennzeichnet, dass** es sich bei dem $Al(OH)_3$-Puder um Bayerit handelt.

5. Verfahren gemäß einem der vorherigen Ansprüche, **dadurch gekennzeichnet, dass** es sich bei der wässrigen Eisensalz-Kobalt-Lösung um eine Lösung aus $Fe(NO_3)_3$ und $Co(Ac)_2$ handelt.

6. Verfahren gemäß einem der vorherigen Ansprüche, **dadurch gekennzeichnet, dass** das $Fe(NO_3)_3$ und $Co(Ac)_2$ über eine Reinheit zwischen 95 und 99% verfügen.

7. Verfahren gemäß einem der vorherigen Ansprüche, **dadurch gekennzeichnet, dass** der Ablauf zum Trocknen des Werkstoffes in einem ringförmigen Trocknungsgerät erfolgt.

8. Verfahren gemäß einem der vorherigen Ansprüche, **dadurch gekennzeichnet, dass** dem Ablauf zur Auswahl des Körnungsgrößenanteils ein Mahlvorgang vorausgeht.

9. Verfahren gemäß dem Ablauf 8, **dadurch gekennzeichnet, dass** die besagte Auswahl durch Sieben erfolgt.

**10.** Verfahren gemäß einem der vorherigen Ansprüche, **dadurch gekennzeichnet, dass** die Abläufe zum Vermischen, zum Trocknen und zur Auswahl zeitgleich erfolgen.

**11.** Verfahren gemäß einem der vorherigen Ansprüche, **dadurch gekennzeichnet, dass** dem Schritt des Vermischens ein zusätzlicher Ablauf zum Mahlen und zur Auswahl vorhergeht.

**12.** Verfahren zur Herstellung von mehrwandigen Kohlenstoff-Nanoröhren, die aus einem Verfahren gemäß dem Anspruch 1 gewonnen werden und das die folgenden aufeinanderfolgenden Schritte umfasst:

- Vorherige Aufbereitung des besagten Katalysators bei einer Temperatur von ca. 700°C in einem Ofen;
- Bereitstellung eines Ethylen- und/oder reinen Methanstromes mit dem besagten Katalysator bei einer Temperatur zwischen 650 und 750 °C über eine Dauer von 15 bis 25 Minuten im Ofen.

**13.** Herstellungsverfahren gemäß dem Anspruch 12, **dadurch gekennzeichnet, dass** die Raumzeit zwischen dem Katalysator und dem Gas bei 0,8 bis 1,8 (M/F) liegt.

**Fig.1**

**Fig.2**

Fig.3

Fig.4

Fig. 5

Fig.6

Fig.7

16

**RÉFÉRENCES CITÉES DANS LA DESCRIPTION**

**Documents brevets cités dans la description**

- WO 03004410 A1

- WO 03004410 A